# EUROPÄISCHE PATENTSCHRIFT

(11) **EP 2 887 477 B1**
(45) Veröffentlichungstag und Bekanntmachung des Hinweises auf die Patenterteilung: **25.09.2019**
(21) Anmeldenummer: 13199405.5
(22) Anmeldetag: 23.12.2013
(51) Int. Cl.: H02G 3/08, H02G 3/16

(54) **Gehäuse für einen Abzweigkasten**
Housing for a junction box
Boîtier pour une boîte de dérivation

(43) Veröffentlichungstag der Anmeldung: 24.06.2015
(73) Patentinhaber: Gustav Hensel GmbH & Co. KG, 57368 Lennestadt (DE)
(72) Erfinder: Karl-Heinz Deichmann, 57368 Lennestadt (DE); Marcus Baetz, 57399 Kirchhundem (DE); Jürgen Adler, 57392 Schmallenberg (DE)
(74) Vertreter: Rausch Wanischeck-Bergmann Brinkmann

(56) Entgegenhaltungen:
- WO-A1-2013/041755
- FR-A- 1 516 254
- FR-A1- 2 308 230
- GB-A- 2 410 378
- US-A1- 2002 112 869
- US-A1- 2011 244 719
- US-A1- 2013 087 360
- "Ansell Lightning - Amenity Catalogue 2012", , 23 November 2012 (2012-11-23), XP055246492, Retrieved from the Internet: URL:http://www.anselluk.com/assets/7_Ameni ty_2012_166-237_1.pdf [retrieved on 2016-02-01]
- OBO Bettermann: "Technisches Datenblatt Kabelabzweigkasten T250, Einsteckdichtung", , 28 February 2013 (2013-02-28), Retrieved from the Internet: URL:http://downloads.cdn.re-in.de/375000-3 99999/394658-da-01-de-ABZWEIGKASTEN_T250__ 240X190X95MM_LICHTGR.pdf [retrieved on 2018-04-11]

## Beschreibung

Die Erfindung betrifft einen Abzweigkasten für die Installation von Elektrokabeln, mit einem Gehäuse, welches mehrere, vorzugsweise vier jeweils eine Ecke aufweisende Eckbereiche aufweist, wobei wenigstens einer der Eckbereiche in Richtung seiner Ecke abfallend ausgebildet ist, wobei das Gehäuse ein Unterteil und einen Deckel aufweist, wobei das Unterteil und der Deckel zu einander korrespondierende Befestigungsmittel aufweisen, wobei die Befestigungsmittel in den Eckbereichen des Gehäuses angeordnet sind, und wobei eine Oberfläche des Gehäuses, in der eine Öffnung für eines der Befestigungsmittel ausgebildet ist, gekrümmt oder schräg zur Achse des Befestigungsmittels verläuft.

Ein gattungsgemäßer Abzweigkasten ist aus OBO Bettermann: "Technisches Datenblatt Kabelabzweigkasten T250, Einsteckdichtung" bekannt. Es handelt sich hierbei um eine Vorrichtung zur Verteilung von elektrischen Signalen und elektrischer Leistung.

In einen Abzweigkasten können mehrere Elektrokabel von außen eingeführt werden. Hierzu kann ein Abzweigkasten Öffnungen, beispielsweise in den Seitenwänden, aufweisen. Innerhalb des Abzweigkastens können die einzelnen Leitungen der Elektrokabel miteinander verbunden werden. Auf diese Weise ist es möglich, beispielsweise den Strom eines ersten Elektrokabels auf zwei abgehende Elektrokabel zu verteilen.

Abzweigkästen sind in vielfältigen Ausgestaltungen bekannt. Ein Abzweigkasten kann ein aus einem Unterteil und einem Oberteil bestehendes Gehäuse aufweisen. Das Unterteil und das Oberteil können durch zueinander korrespondierende Befestigungsmittel miteinander verbindbar sein. Hierbei kann es sich beispielsweise um formschlüssige Verbindungsmittel, insbesondere Schrauben und Innengewinde, und/oder dergleichen handeln. Sofern das Oberteil und das Unterteil bestimmungsgemäß miteinander verbunden sind, befindet sich das Gehäuse im geschlossenen Zustand. Das Oberteil kann ein Deckel sein. Das Unterteil kann einen Boden und Seitenwände aufweisen.

Zum technologischen Hintergrund gehört die US 2002/112869 A1, welche zwar keinen Abzweigkasten für die Installation von Elektrokabeln, aber eine elektronische Steuereinheit zur Verwendung in einem Kraftfahrzeug offenbart. Diese Steuereinheit verfügt über ein Gehäuse, dessen Deckel zwei schräge Seitenwände aufweist. Die Eckbereiche des Deckels sind teilweise schräg abfallend ausgebildet. An den schräg abfallenden Bereich schließt sich eine Fläche zur Anordnung eines Befestigungsmittels an.

Aus der DE 1 665 204 A1 ist noch eine Verteilerdose bekannt, insbesondere eine solche für Speicherheizungen. Die Verteilerdose hat ein Unterputzteil und einen Deckel, der im endmontierten Zustand das Unterputzteil abdeckt. Das Unterputzteil ist mittels Trennwänden in einen Schwachstromteil einerseits und einen Starkstromteil andererseits unterteilt.

Die US 2011/0244719 A1 zeigt eine Gehäuseeinheit mit einem Unterteil und einem Deckel, wobei der Deckel das Unterteil im endmontierten Zustand abdeckt. Zwischen dem Unterteil und dem Deckel ist im endmontierten Zustand ein O-Ring angeordnet. Im endmontierten Zustand sind der Deckel und das Unterteil unter Zwischenordnung des O-Rings miteinander verrastet. Eine Seitenwand des Unterteils verfügt über Öffnungen, durch die hindurch Kabelstecker geführt sind.

Es ist üblich, dass gattungsgemäße Abzweigkästen beispielsweise an Wänden und Decken, Installationsschächten oder an vergleichbaren Orten montiert werden müssen. Dort herrschen oftmals schwierige Arbeitsbedingungen. Gattungsgemäße Abzweigkästen werden auf unterschiedlichsten Untergründen befestigt oftmals schlechten Licht-, Sicht- und/oder Raumverhältnissen. Es besteht oftmals die Notwendigkeit, mehrere Bauteile und/oder Werkzeuge gleichzeitig zu halten und/oder zu handhaben. Es müssen Kabel in den Abzweigkasten eingeführt und innerhalb des Abzweigkastens verdrahtet werden. Es besteht daher insgesamt das Bestreben, einen gattungsgemäßen Abzweigkästen möglichst einfach handhaben und montieren zu können.

Vor diesem Hintergrund ist es die **Aufgabe** der vorliegenden Erfindung, einen gattungsgemäßen Abzweigkasten hinsichtlich der Handhabung und Montage zu verbessern.

Zur **Lösung** schlägt die Erfindung vor, dass das Unterteil und der Deckel in Richtung der Befestigungsmittel abgesenkt und/oder gekrümmt ausgebildet sind und dass die Befestigungsmittel einen Kopf aufweisen, dessen Oberseite entsprechend der Oberfläche des Gehäuses gekrümmt oder schräg ausgebildet ist, wobei der Kopf des Befestigungsmittels im geschlossenen Zustand mit der Oberfläche des Gehäuses fluchtet und im geöffneten Zustand zumindest teilweise von der Oberfläche des Gehäuses vorsteht.

Die Eckbereiche eines Gehäuses sind diejenigen Bereiche, in denen jeweils zwei Seitenwände des Gehäuses aufeinandertreffen. Die Eckbereiche können je nach Ausbildung des Gehäuses eine unterschiedliche Gestalt aufweisen. Sofern zwei Seitenwände unter Ausbildung einer gemeinsamen Kante mit zwei endseitigen Ecken (kann als Eckkante bezeichnet werden) aufeinandertreffen, ist ein Bereich umfassend die gemeinsame Kante und die beiden Ecken als Eckbereich anzusehen. Sofern das Gehäuse derart abfallend ausgebildet ist, dass jeweils zwei Seitenwände, der Deckel und der Boden in einem gemeinsamen Punkt aufeinandertreffen, ist ein Bereich umfassend diesen gemeinsamen Punkt als Eckbereich anzusehen.

Bekannte Abzweigkästen sind im Wesentlichen quaderförmig aufgebaut. Alternativ sind Abzweigkästen mit einem flachen Boden, einer zylindrischen Seitenwand und einem flachen Deckel bekannt. Der Deckel kann randseitig eine Fase aufweisen, welche aber nichts an der im Wesentlichen flachen Gestalt des Deckels ändert. Bekannte Abzweigkäsen zeichnen sich dadurch aus, dass die Außenoberflächen des Deckels und des Bodens flach und parallel zueinander verlaufen und durch rechtwinklig dazu verlaufende Seitenwände verbunden sind. Die Eckbereiche der bekannten Gehäuse gehen also flach, d.h. ohne Neigung oder dergleichen in die jeweilige Ecke über.

Im Unterschied dazu schlägt die Erfindung vor, dass wenigstens einer der Eckbereiche in Richtung seiner Ecke abfällt. Mit anderen Worten fällt die Außenoberfläche des Gehäuses in Richtung der Ecke ab. Die Außenoberfläche des Gehäuses verläuft von der Mitte einer Seitenwand gesehen also nicht flach in Richtung der Ecke, sondern fällt zumindest bereichsweise ab und verläuft schräg, gekrümmt oder dergleichen in Richtung der Ecke.

Dies bedeutet, dass die Eckbereiche des Gehäuses in besonderer Weise ausgebildet sind, nämlich im Unterschied zum übrigen Gehäusebereich abgesenkt. Insbesondere fällt die Außenoberfläche derart in Richtung der Ecke ab, dass die Gehäusedicke im Eckbereich geringer ist als im Bereich des übrigen Gehäuses. Die Höhe einer Seitenwand des Gehäuses kann von der Mitte der Seitenwand ausgehend in Richtung der Eckbereiche abnehmen.

Ausgehend von einem Quader als Grundform des Gehäuses, weist dieses eine Oberseite, einen Boden und vier Seitenflächen auf. Jeweils zwei Seitenflächen treffen unter Ausbildung einer Eckkante aufeinander. Das Gehäuse hat somit vier Eckkanten. Die Seitenflächen und die Oberseite bzw. der Boden treffen jeweils unter Ausbildung von vier Seitenkanten aufeinander. Jede Seitenfläche ist also durch zwei parallele Seitenkanten und zwei parallele Eckkanten begrenzt. Die Erfindung sieht nun mit anderen Worten vor, dass sich zumindest eine Seitenkante einer Seitenfläche von einer Mitte der Seitenfläche ausgehend in Richtung der Eckkante betrachtet auf die andere Seitenkante zu bewegt, d.h. abfällt. Durch dieses Abfallen verkürzt sich die Eckkante. Eine endseitige Ecke der Eckkante liegt nicht mehr in einer Ebene mit der Oberseite bzw. dem Boden des Gehäuses, sondern mit Bezug zur Oberseite bzw. zum Boden abgesenkt. Insofern fällt die Außenoberfläche in einem Bereich um die Eckkante herum in Richtung der Ecke ab.

Das Gehäuse kann in wenigstens einem Eckbereich spitz zulaufen. Dies meint insbesondere nur den Verlauf dem Grunde nach, d.h. schließt nicht aus, dass die Ecke selbst nicht spitz, sondern flach oder abgerundet ausgebildet ist. Das Gehäuse kann die Gestalt eines viereckigen Kissens haben.

Die Eckbereiche des Gehäuses können abgesenkt ausgebildet sein. Abgesenkt im Sinne der Erfindung kann bedeuten, dass die Höhe des Gehäuses im Eckbereich geringer ist, als die Höhe des Gehäuses in den übrigen, den Eckbereich umgebenden Bereichen, insbesondere sämtlichen Bereichen des Gehäuses.

Das Gehäuse kann in Richtung sämtlicher Ecken abfallend ausgebildet sein. Das Gehäuse kann in sämtlichen Eckbereichen abgesenkt ausgebildet sein. Das Gehäuse kann rechteckig mit vier Ecken ausgebildet sein. Abfallend bzw. abgesenkt im Sinne der Erfindung umfasst insbesondere eine abgestufte, prismatische, gekrümmte, ovale oder runde Ausbildung der Außenoberfläche in Richtung der Ecke bzw. des Eckbereichs des Gehäuses.

Abfallend im Sinne der Erfindung kann bedeuten, dass die Höhe des Innenraums des Gehäuses in Richtung der Ecke abnimmt. Abgesenkt im Sinne der Erfindung kann bedeuten, dass die Höhe des Innenraums des Gehäuses im Eckbereich reduziert ist. Insofern unterscheidet sich das erfindungsgemäße Abfallen von beispielsweise einer bloßen Fase im Deckel oder dergleichen, welche Maßnahmen keine Auswirkungen auf die Gestalt des Innenraums des Gehäuses haben. Das Abfallen oder die Neigung kann von einer gedachten Mitte auf einer Seitenfläche des Gehäuses aus gesehen in Richtung der Ecken zunehmen.

Ein erfindungsgemäßer Abzweigkasten hat eine Art organische, sphärische Gestalt. Er ist besonders gut zu greifen und zu halten. Mit der erfindungsgemäßen Ausgestaltung geht eine verbesserte Ergonomie einher. Das Gehäuse kann gemäß der Erfindung zudem in der Mitte erhöht ausgebildet sein. Dadurch kann der Innenraum eines erfindungsgemäßen Abzweigkastens ein vergrößertes Volumen aufweisen. Somit können Kabel im Gehäuse einfacher und flexibler untergebracht werden. Zudem ermöglicht es ein erfindungsgemäßer Abzweigkasten, im Gehäuse Instrumente, Messeinrichtungen und/oder dergleichen unterzubringen. Die erfindungsgemäße Ausgestaltung der Eckbereiche ermöglicht zudem, die Seitenwände bei gleichbleibender Länge der Eckkante höher, d.h. flächenmäßig größer auszubilden. Dies führt zu mehr Flexibilität und mehr Möglichkeiten, wo und wie Kabel in das Gehäuse eingeführt werden können. Ein erfindungsgemäßer Abzweigkasten hat zudem den Vorteil, dass die wenigstens eine Ecke des Gehäuses leichter ertastet werden kann, auch bei schlechter Sicht und beengten Raumverhältnissen. Zudem sind die Ecken leichter zugänglich, da die Ecken mit Bezug auf die Oberseite des Gehäuses tiefer sitzen. Dies ist insbesondere dann vorteilhaft, wenn im Bereich der Ecken Verbindungsmittel zur Montage des Gehäuses auf einem Untergrund oder zur Anordnung des Gehäusedeckels an einem Gehäuseunterteil vorgesehen sind. Bei den aus dem Stand der Technik bekannten Abzweigkästen mussten kleinere Baugrößen gewählt werden, damit die Ecken für diese Zwecke noch zugänglich sind. Mit einem erfindungsgemäßen Abzweigkasten können größere Baugrößen verwendet werden, da die Ecken aufgrund deren besonderer Ausgestaltung immer noch zugänglich sind. D.h. bei schlechter Zugänglichkeit am Einsatzort kann bei einem erfindungsgemäßen Abzweigkasten ein Gehäuse mit einer größeren Grundfläche gewählt werden, da die Eckbereiche im Vergleich mit einem herkömmlichen Abzweigkasten immer noch zugänglich sind. Folglich kann also bei gegebenem zur Verfügung stehenden Bauraum im Vergleich mit den bekannten Abzweigkästen ein Gehäuse mit größerem Innenraum verwendet werden.

Das Gehäuse kann beispielsweise transparent oder halb-transparent, insbesondere transluzent ausgebildet sein. Dies erleichtert die Montage, da beispielsweise zwischen Deckel und Unterteil verklemmte Kabel und dergleichen gesehen werden können. Das Gehäuse kann beispielsweise aus Polypropylen oder Polycarbonat bestehen. Diese Materialien haben sich in Versuchen der Anmelderin als besonders geeignet erwiesen.

Erfindungsgemäß weisen das Unterteil und der Deckel zueinander korrespondierende und in den Eckbereichen des Gehäuses angeordnete Befestigungsmittel auf, wobei das Unterteil und der Deckel in Richtung der Befestigungsmittel abfallend und/oder abgesenkt ausgebildet sind. Insbesondere können das Unterteil und der Deckel des Gehäuses in Richtung des Befestigungsmittels gekrümmt ausgebildet sein. Dieses Abfallen, diese Absenkung bzw. Krümmung soll nicht beliebig ausgebildet sein, sondern derart, dass die Außenoberfläche in Richtung des Befestigungsmittels abfällt bzw. sich krümmt. Das Befestigungsmittel kann eine Befestigungsachse aufweisen, welche sich schräg zu einer (fiktiven) Verbindungsebene zwischen dem Unterteil und dem Deckel erstreckt. Mit der Krümmung der Außenoberfläche ist gemeint, dass sich die Außenoberfläche in Richtung dieser Achse des Befestigungsmittels biegt. Die Außenoberfläche des Unterteils und/oder des Deckels kann eine Großfläche aufweisen. Diese Großfläche ist bevorzugt parallel zu der (fiktiven) Verbindungsebene zwischen dem Deckel und dem Unterteil ausgerichtet. Diese Großfläche geht am äußeren Rand in einen gekrümmten Abschnitt über. Eine an der Außenoberfläche des Unterteils oder des Deckels angelegte Tangente verläuft im Bereich der Großfläche schräg zur Achse des Befestigungsmittels und wechselt dann im Bereich der Krümmung fortlaufend in eine Richtung, die parallel zur Achse des Befestigungsmittels verläuft.

Erfindungsgemäß ist vorgesehen, dass die eine Öffnung für das Befestigungsmittel bereitstellende Oberfläche des Gehäuses gekrümmt oder schräg zur Achse des Befestigungsmittels verläuft.

Erfindungsgemäß ist ferner vorgesehen, dass die Befestigungsmittel einen Kopf aufweisen, dessen Oberseite entsprechend der Oberfläche des Gehäuses gekrümmt oder schräg ausgebildet ist, wobei das Befestigungsmittel im geschlossenen Zustand mit der Außenoberfläche des Gehäuses fluchtet und im geöffneten Zustand zumindest teilweise von der Außenoberfläche des Gehäuses vorsteht.

Erfindungsgemäß ist ferner vorgesehen, dass es im geöffneten Zustand von der Außenoberfläche des Gehäuses, insbesondere des Deckels und/oder des Unterteils, vorsteht und im geschlossenen Zustand im Gehäuse, insbesondere im Deckel und/oder im Unterteil versenkt ist. Das Befestigungsmittel hebt sich im geöffneten Zustand deutlich von der Außenoberfläche des Gehäuses ab und kann somit leicht als Erhebung ertastet werden. Im geschlossenen Zustand hingegen gleitet ein Finger des Verwenders über die Öffnung für das Befestigungsmittel hinweg, so dass auch dieser Zustand leicht ertastet werden kann. Dies erlaubt eine Art haptisches Feedback, ob das Gehäuse bestimmungsgemäß mit dem Befestigungsmittel verschlossen ist oder nicht. Es ist kein Sichtkontakt erforderlich, um den Öffnungszustand des Gehäuses zu erkennen.

Das Befestigungsmittel ist insbesondere durch Drehung um seine Achse betätigbar. Durch Drehung kann es von einer das Gehäuse verschließenden Stellung in eine das Öffnen des Gehäuses ermöglichende Stellung überführt werden Der Drehwinkel des Befestigungsmittels zwischen diesen beiden Stellungen kann höchstens 180°, insbesondere höchstens 90° betragen. Das Befestigungsmittel kann derart ausgebildet sein, dass eine Betätigung bei nicht ordnungsgemäß geschlossenem Gehäuse zwar möglich ist, jedoch das Befestigungsmittel in eine solche Stellung überführt, in welcher das Befestigungsmittel immer noch von der Außenoberfläche des Gehäuses vorsteht. Auf diese Weise erhält ein Verwender zusätzlich ein haptisches Feedback darüber, ob die das Gehäuse bildenden Bauteile bestimmungsgemäß zueinander angeordnet sind.

Das Befestigungsmittel kann im Deckel des Gehäuses formschlüssig angeordnet sein. Das Befestigungsmittel ist insbesondere nicht in einer Bohrung im Deckel versenkt angeordnet, sondern steht vielmehr mit seinem Kopf bis in den Bereich der Außenoberfläche des Deckels vor. Auf diese Weise kann eine besonders hohe Sicherheit beim Verschließen des Gehäuses erreicht werden. Durch das haptische Feedback des Öffnungszustands des Gehäuses kann nahezu ausgeschlossen werden, dass eines der Befestigungsmittel nicht ordnungsgemäß verschlossen ist. Die IP-Schutzart des Gehäuses kann daher höher gewählt und sicherer erreicht werden.

Die Erfindung betrifft insbesondere den Fall, dass der Rand der Außenoberfläche des Unterteils und/oder des Deckels in Richtung des Befestigungsmittels gekrümmt ausgebildet ist. Ein von diesem Rand begrenzter, innerer Abschnitt der Außenoberfläche kann flach ausgebildet sein. Es kann aber auch die gesamte Außenoberfläche des Unterteils oder des Deckels gekrümmt ausgebildet sein.

Die gekrümmte Ausbildung der Außenoberfläche hat den Vorteil, dass für den Verwender des Abzweigkastens eine verbesserte Haptik gegeben ist. Dies erleichtert die Handhabung des Abzweigkastens. Hinzu kommt, dass der gekrümmte Rand der Außenoberfläche in einfacher Weise mit den Fingern ertastet werden kann. Sofern das Unterteil und der Deckel nicht richtig aufeinandersitzen, kann ein sich an die Außenoberfläche anschließender Spalt oder eine Stufe ertastet werden. Auf diese Weise wird eine Art haptisches Feedback erreicht, das durch bloßes Ertasten eine Information darüber bereitstellt, ob das Gehäuse ordnungsgemäß geschlossen ist. Dies ist insbesondere dann von Vorteil, wenn der Abzweigkasten nicht ohne weiteres gesehen werden kann, sei es wegen beengter Raumverhältnisse oder schlechter Lichtverhältnisse. Insgesamt wird also die Handhabung verbessert.

Gemäß einer vorteilhaften Weiterbildung der Erfindung ist die Außenoberfläche des Gehäuses in Richtung wenigstens einer Ecke gekrümmt ausgebildet. Es kann der Eckbereich bzw. die Außenoberfläche des Deckels und/oder des Gehäuses gekrümmt sein. Die Krümmung ist insbesondere derart ausgebildet, dass sich die Außenoberfläche von einer Erstreckungsrichtung parallel zum Boden bzw. zum Deckel des Gehäuses in eine Richtung rechtwinklig zum Boden bzw. zum Deckel des Gehäuses krümmt.

Gemäß einer vorteilhaften Weiterbildung der Erfindung geht der Deckel im geschlossenen Zustand formbündig in das Unterteil über. Formbündig meint, dass bei einem ordnungsgemäß geschlossenen Gehäuse keinerlei Spalte, Stufen oder dergleichen zwischen dem Unterteil und dem Deckel verbleiben. Beide gehen quasi stetig ineinander über. Auf diese Weise kann noch besser das vorstehend bereits thematisierte haptische Feedback realisiert werden. Ein Verwender würde es mit seinen Fingerspitzen sofort ertasten, wenn das Gehäuse nicht ordnungsgemäß verschlossen ist. Auf diese Weise wird die Handhabung und auch die Sicherheit bei der Verwendung eines erfindungsgemäßen Abzweigkastens erhöht.

Gemäß einer vorteilhaften Weiterbildung der Erfindung ist die Außenoberfläche des Unterteils und/oder des Deckels in zwei linear unabhängigen Raumrichtungen abfallend bzw. gekrümmt ausgebildet. Es handelt sich bei der Krümmung mit anderen Worten nicht um eine Krümmung um nur eine einzige Raumrichtung. Es handelt sich vielmehr um eine verkoppelte, insbesondere dreidimensionale Krümmung. Die Krümmung kann sowohl um eine Achse parallel zum Deckel, insbesondere zur Großfläche des Deckels, als auch eine Achse schräg zum Deckel, insbesondere zur Großfläche des Deckels ausgebildet sein. Durch die Krümmung wird insbesondere erreicht, dass das Gehäuse zumindest abschnittsweise sphärisch ausgebildet ist. Das Gehäuse kann zumindest abschnittsweise die Form eines Ovoids haben. Das Gehäuse kann eine kugelförmige beziehungsweise rundliche Form aufweisen. Der Vorteil eines im erfindungsgemäßen Sinn gekrümmt ausgebildeten Gehäuses liegt auch in der damit verbundenen Materialeinsparung. Die bei herkömmlichen Abzweigkästen vorhandenen Ecken des Gehäuses werden quasi geglättet. Dadurch ist für die Herstellung eines erfindungsgemäßen Abzweigkastens insgesamt weniger Rohmaterial erforderlich. Dieser Effekt verstärkt sich durch die vorstehend beschriebene Weiterbildung mit der Krümmung zwei linear unabhängigen Raumrichtungen noch weiter. Ein erfindungsgemäßer Abzweigkasten ist somit zusätzlich kostengünstiger herzustellen.

Die Krümmung der Außenoberfläche des Unterteils und/oder des Deckels kann insbesondere oval ausgebildet sein. Dies bedeutet insbesondere, dass die Außenoberfläche stetig verläuft.

Gemäß einer vorteilhaften Weiterbildung der Erfindung aber auch unabhängig von den übrigen Merkmalen der Erfindung weist das Unterteil einen Boden und Seitenwände auf, wobei zumindest eine Seitenwand konvex ausgebildet ist. Die Seitenwände erstrecken sich schräg, insbesondere rechtwinklig vom Boden weg. Die konvexe Ausbildung der Seitenwände ist im Bereich der vom Boden abgewandten Stirnseite der Seitenwand vorgesehen. Das Unterteil hat gemäß dieser Weiterbildung die Gestalt eines Kastens, bei welchem die Seitenwände bogenartig mit einem Scheitelpunkt in der Mitte ausgebildet sind. Der Deckel kann entsprechende konkave Ausnehmungen in seinen Seitenwänden aufweisen. Auf diese Weise greifen die konvexen Seitenwände und die konkaven Ausnehmungen des Deckels bei der Montage ineinander. Die Montage des Gehäuses wird dadurch vereinfacht, da durch diese konvexe/konkave Geometrie beim Zusammenfügen ein quasi automatisches Bewegen der beiden Teile zueinander in die richtige Position erfolgt. Beim ersten Anlegen des Deckels am Unterteil kommt es nur zu einem punktuellen Kontakt. Entlang der Kontaktpunkte kann der Deckel dann geführt auf das Unterteil aufgeschoben werden. Erst bei Erreichen der Endlage, d.h. dem geschlossenen Zustand des Gehäuses, kommt es zu einem vollen Kontakt zwischen Deckel und Unterteil.

Gemäß einer vorteilhaften Weiterbildung der Erfindung aber auch unabhängig von den übrigen Merkmalen der Erfindung weist der Deckel Beine auf. Diese ergeben sich insbesondere dann, wenn der Deckel die zuvor beschriebenen konkaven Ausnehmungen aufweist. Der Deckel weist vier in seinen durch die Krümmung abgerundeten Ecken angeordnete Beine auf. Zwischen diesen Beinen ist der Deckel seitlich konkav ausgebildet. Die Befestigungsmittel des Deckels können in den Beinen angeordnet sein. Bei der Montage wird der Deckel mit den Beinen voran auf das Unterteil gesteckt. Insbesondere kann der Deckel die Gestalt eines Tisches mit einer Tischoberfläche aufweisen, wobei die Kanten und die Ecken der Tischoberfläche derart gekrümmt ausgebildet sind, dass die Tischoberfläche gekrümmt in die Beine übergeht. Der Deckel kann als organisch geformt beschrieben werden.

Diese zuvor beschriebenen Ausgestaltungen des Gehäuses beziehungsweise des Deckels haben allesamt den Zweck, das eingangs beschriebene haptische Feedback beim Zusammenfügen von Unterteil und Deckel weiter zu verbessern. Insofern wird durch alle zuvor beschriebenen Weiterbildungen die Handhabung, insbesondere Montage des Abzweigkastens verbessert.

Gemäß einer vorteilhaften Weiterbildung der Erfindung weisen das Unterteil und/oder der Deckel flache Bereiche auf, welche stetig in die abfallend, gekrümmt oder oval geformte Außenoberfläche übergehen. Gemäß dieser Weiterbildung ist die Oberfläche nicht vollständig abfallend, gekrümmt oder oval ausgebildet, sondern weist auch flache Bereiche auf. Scharfe Kanten oder dergleichen werden jedoch dennoch vermieden, da der Übergang zwischen dem gekrümmt oder oval geformten Bereich und dem flachen Bereich stetig verläuft. Insbesondere kann vorgesehen sein, dass der Übergang stetig differenzierbar ausgebildet ist. Auf diese Weise wird die Haptik und somit auch die Handhabung des Abzweigkastens weiter verbessert.

Gemäß einer vorteilhaften Weiterbildung der Erfindung ist das Gehäuse sphärisch ausgebildet mit sechs schräg, insbesondere rechtwinklig zueinander ausgerichteten flachen Bereichen. Man kann sich eine quaderförmige Grundform des Gehäuses vorstellen, bei welchem Quader die Ecken abgerundet wurden. Es kann vorgesehen sein, dass einige oder alle der flachen Bereiche voneinander getrennt sind durch die gekrümmt beziehungsweise oval geformten Bereiche.

Gemäß einer vorteilhaften Weiterbildung der Erfindung aber auch unabhängig von den übrigen Merkmalen der Erfindung ist der Deckel des Gehäuses unverlierbar mit dem Unterteil verbunden. Hierzu ist ein Verbindungsmittel vorgesehen, welches am Deckel einerseits und am Gehäuse andererseits befestigt ist. Dieses kann beispielweise aus einem thermoplastischen Elastomer gebildet sein. Es kann sich um ein Band handeln. Das Band kann an jeweils einer Öse im Deckel und im Unterteil befestigt sein. Der Deckel kann auf diese Weise im geöffneten Zustand relativ zum Gehäuse beliebig bewegt werden, ist aber unverlierbar am Unterteil gehalten. Das Verbindungsmittel kann aber auch ein Scharniergelenk sein. Der Deckel lässt sich dann relativ zum Unterteil um eine definierte Achse drehen. Diese Weiterbildung ist vorteilhaft, wenn der Abzweigkasten beispielsweise an der Decke montiert ist. Ein Verwender kann dann mit beiden Händen am Abzweigkasten arbeiten, ohne den Deckel halten zu müssen oder ihn weglegen zu müssen.

Gemäß einer vorteilhaften Weiterbildung der Erfindung aber auch unabhängig von den übrigen Merkmalen der Erfindung ist am Gehäuse ein Informationsmittel angeordnet. Das Informationsmittel dient der Identifikation einer Funktionalität des Abzweigkastens. Beispielsweise kann das Informationsmittel die Funktion der in den Abzweigkasten geführten Kabel wiedergeben. Es kann sich um ein (wiederverwendbares) Beschriftungsschild oder dergleichen handeln. Das Informationsmittel kann außen am Gehäuse oder auf der Innenoberfläche des Gehäuses angeordnet sein. Das Informationsmittel ragt insbesondere nicht in den Innenraum des Gehäuses hinein und behindert somit nicht die Kabel oder dergleichen.

Details der Erfindung werden im Folgenden anhand der in den Figuren gezeigten Ausführungsbespiele beschrieben. Es zeigen:
- Fig. 1a: eine perspektivische Darstellung eines Abzweigkastens gemäß der Erfindung mit geschlossenem Gehäuse;
- Fig. 1b: eine perspektivische Darstellung des Deckels des Abzweigkastens gemäß Fig. 1a;
- Fig.2: eine Seitenansicht des Abzweigkastens gemäß Fig. 1;
- Fig. 3: eine Draufsicht auf den Abzweigkasten gemäß Fig. 1;
- Fig. 4: eine perspektivische Darstellung des Unterteils eines Abzweigkastens mit einer Klemme;
- Fig. 5: die Darstellung gemäß Fig. 4, wobei ein Zwischenzustand bei der Montage gezeigt ist;
- Fig. 6: die Darstellung gemäß Fig. 4, wobei ein weiterer Zwischenzustand bei der Montage gezeigt ist; und
- Fig. 7: Ausführungsformen einer Klemme und eines Adapters gemäß der Erfindung.

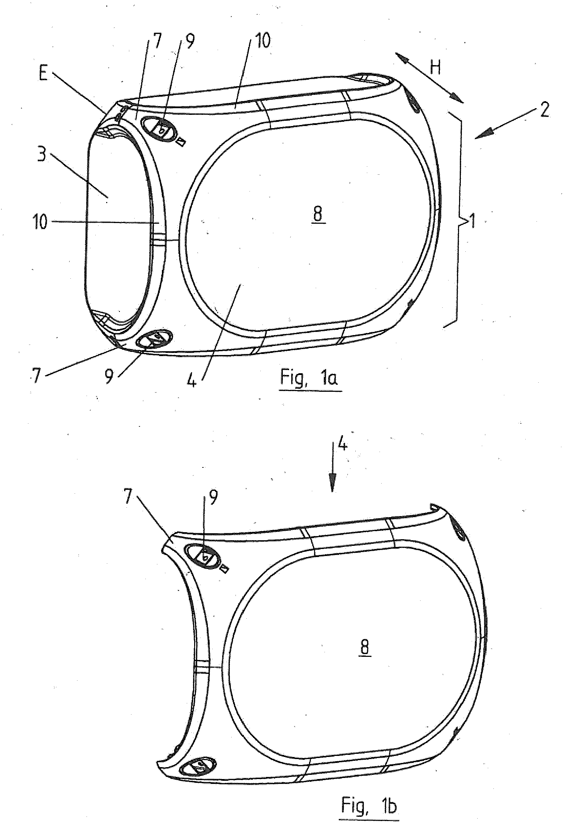

Fig. 1a zeigt eine Ausführungsform eines Abzweigkastens 1 gemäß der Erfindung. Darstellt ist eine perspektivische Draufsicht auf ein Gehäuse 2 des Abzweigkastens 1. Das Gehäuse 2 ist geschlossen. Dies bedeutet, dass ein Deckel 4 auf einem Unterteil 3 angeordnet ist.

Das Gehäuse 2 weist eine Höhe H auf. Die Höhe H erstreckt sich rechtwinklig zum Boden 5 des Unterteils 3 bzw. zur Oberfläche 8 des Deckels 4. Das Gehäuse weist zudem vier Ecken E auf.

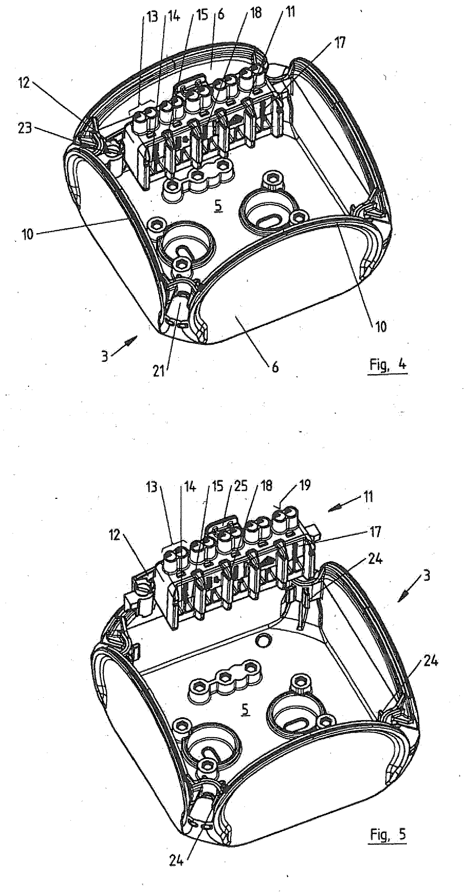

Der Deckel 4 ist in perspektivischer Darstellung in Fig. 1b dargestellt. Das Unterteil 3 ist in den Figuren 4 bis 6 dargestellt. Es ist für das Gehäuse 2 charakteristisch, dass sowohl das Unterteil 3 als auch der Deckel 4 eine teilweise gekrümmt ausgebildete Außenoberfläche aufweisen. Der Deckel 4 weist eine Oberseite 8 auf. Diese Oberseite 8 ist flach ausgebildet. Die Oberseite 8 ist oval, insbesondere eiförmig begrenzt.

An die Oberfläche 8 schließt sich eine gekrümmte Außenoberfläche an. Diese verbindet vier Beine 7 mit der flachen Oberseite 8. Die Oberfläche 8 des Deckels 4 geht zu allen Seiten hin in einen gekrümmten Oberflächenbereich über. Die Beine 7 sind im Bereich der Ecken E ausgebildet.

Die Krümmung der Außenoberfläche verläuft von der flachen Oberseite 8 ausgehend in Richtung der Beine 7, insbesondere in Richtung an den Beinen 7 angeordneter Befestigungsmittel 9. Die Befestigungsmittel 9 weisen eine Richtung auf, in welche das Befestigungsmittel 9 verdreht werden, geschoben werden oder dergleichen betätigt werden kann. Die Krümmung der Außenoberfläche geht soweit, dass eine gedachte Tangente an der Außenoberfläche im Bereich des Beins 7 einen Verlauf parallel zur Betätigungsrichtung des Befestigungsmittels 9 erreicht.

Die Krümmung der Außenoberfläche führt dazu, dass im Bereich der Ecken E die Höhe H des Gehäuses 2 geringer ist als in sämtlichen übrigen Bereichen des Gehäuses 2.

Nebeneinander angeordnete Beine 7 sind jeweils durch eine konkave Ausnehmung im Deckel 4 miteinander verbunden. Diese konkaven Ausnehmungen dienen der Aufnahme entsprechend konvexer Seitenwände 6 des Unterteils 3. Die Beine 7 des Deckels 4 weisen jeweils Befestigungsmittel 9 auf. Die Befestigungsmittel 9 dienen der Verbindung mit dem Unterteil 3. Bei dem Befestigungsmittel 9 kann es sich beispielsweise um Rasthaken, Schrauben oder dergleichen handeln.

Das Unterteil 3 weist einen Boden 5 sowie vier Seitenwände 6 auf. Die Seitenwände 6 erstrecken sich vom Boden 5 weg. An dem dem Boden 5 gegenüberliegenden Ende sind die Seitenwände 6 konvex gekrümmt. Diese konvexe Krümmung der Seitenwände 6 korrespondiert zu der konkaven Krümmung der Ausnehmung im Deckel 4.

Die Seitenwände 6 des Unterteils 3 weisen jeweils einen Kragen 10 auf. Der Kragen 10 dient als Auflager für den Deckel 4. Fig. 1a zeigt das Gehäuse 2 im geschlossenen Zustand. Die vier Beine 7 ragen in entsprechende Bereiche des Unterteils 3 hinein. Die konkaven Ausnehmungen des Deckels 4 schließen formbündig mit den konvex geformten Seitenwänden 6 des Unterteils 3 ab. Der Deckel 4 liegt auf den Kragen 10 der Seitenwände 6 des Unterteils 3 auf.

Dieser formbündige Verbund zwischen dem Unterteil 3 und dem Deckel 4 führt dazu, dass ein falscher Sitz des Deckels 4 leicht erfühlt werden kann. Es verbleibt dann ein deutlicher Spalt oder eine deutliche Stufe zwischen dem Deckel 4 einerseits und dem Unterteil 3 andererseits. Dieser ist leicht zu ertasten. Auf diese Weise kann der korrekte Zusammenbau des Gehäuses 2 auch bei schlechten Sichtverhältnissen, insbesondere bei Dunkelheit ohne weiteres überprüft werden.

Das Unterteil 3 weist ebenfalls eine ebenfalls oval geformte Außenoberfläche auf. Dies betrifft beispielsweise die Ecken, welche durch den Schnittpunkt zweier nebeneinanderliegender Seitenwände 6 und dem Boden 5 entstehen. Die Krümmung der Außenoberfläche des Unterteils 3 ist entsprechend der Krümmung der Außenoberfläche des Deckels 4 ausgebildet. Dadurch ergibt sich insgesamt eine homogene Anmutung des Gehäuses 2.

Im Unterteil 3 sind in den Eckbereichen Befestigungsmittel 21 vorgehen. Diese Befestigungsmittel 21 des Unterteils 3 korrespondieren zu den Befestigungsmitteln 9 des Deckels 4. Es handelt sich hierbei beispielsweise um Innengewinde, einen Hinterschnitt für Rasthaken oder dergleichen.

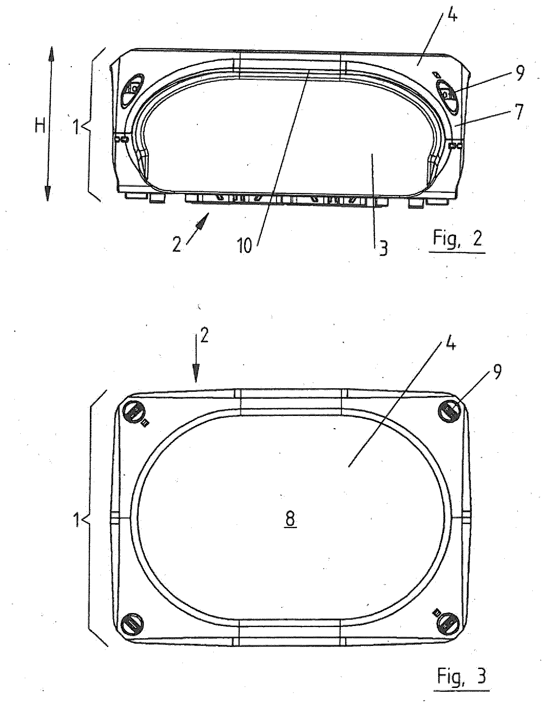

Die Figuren 2 und 3 zeigen das geschlossene Gehäuse 2 in einer Seitenansicht beziehungsweise einer Draufsicht.

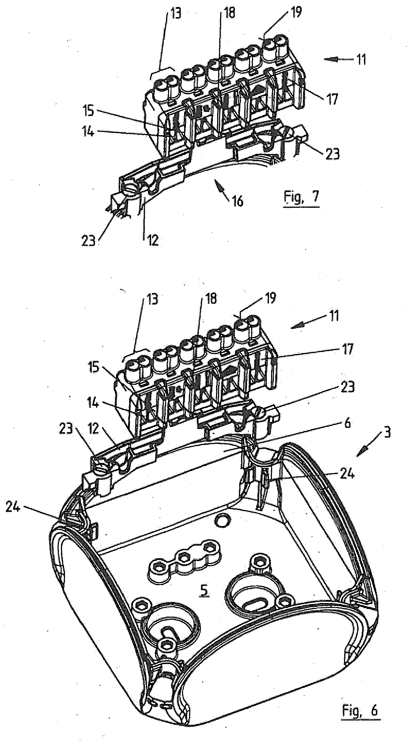

Die Figuren 4 bis 6 zeigen das Unterteil 3 des Abzweigkastens 1. In den Figuren sind verschiedene Zwischenzustände bei der Montage einer Klemme 11 dargestellt. Die Klemme 11 wird mittels eines Adapters 12 im Unterteil 3 angeordnet. Fig. 4 zeigt die fertig montierte Klemme 11. Fig. 5 zeigt die mit dem Adapter 12 verbundene Klemme 11, bevor oder nachdem die Einheit aus beiden Teilen mit dem Unterteil 3 verbunden wird. Fig. 6 zeigt einen Zustand, in welchem die Klemme 11, der Adapter 12 sowie das Unterteil 3 nicht miteinander verbunden sind.

In das Unterteil 3 können Öffnungen eingebracht werden, durch welche Elektroleitungen von außen in den Abzweigkasten 1 hineingeführt werden können. Innerhalb des Abzweigkastens 1 können mehrere eingeführte Elektroleitungen miteinander verbunden werden. Zu diesem Zweck wird die Klemme 11 eingesetzt.

Die Klemme 11 bildet ein einstückiges Bauteil. Dieses Bauteil ist als Einheit handhabbar. Die Klemme 11 ist an einer der Seitenwände 6 des Unterteils 3 angeordnet. Die Klemme 11 ist hierzu mit einem Adapter 12 verbunden, welcher Adapter 12 wiederum an der Seitenwand 6 des Unterteils 3 angeordnet ist.

Zur Anordnung der Klemme 11 mit dem Adapter 12 sind an den Seitenwänden 6 Verbindungsmittel 24 vorgesehen. Diese sind insbesondere in Fig. 6 zu erkennen. Es handelt sich hierbei um Vorsprünge, weiche von den Seitenwänden 6 vorstehen. Der Adapter 12 weist entsprechende Verbindungsmittel 23 auf, welche eine Öffnungs- und eine Schließstellung aufweisen. In der Öffnungsstellung kann der Adapter mit den Verbindungsmitteln 23 an den Verbindungsmitteln 24 der Seitenwände 6vorbeigeführt werden. Anschließend können die Verbindungsmittel 23 in die Schließstellung überführt werden. Die Verbindungsmittel 23 des Adapters 12 hintergreifen dabei die Verbindungsmittel 24 der Seitenwände 6. Die Verbindungsmittel 24 stehen radial von einem gebogenen Abschnitt der Seitenwand 6 vor. Sie spannen einen Winkel von ungefähr 90° auf. Die Verbindungsmittel 24 spannen eine Art Schwalbenschwanz auf, auf welchen der Adapter 12 aufgeschoben werden kann. Der Adapter 12 ist dann formschlüssig an der Seitenwand 6 gehalten. Auf diese Weise kommt es zu einer Festlegung des Adapters 12 an den Seitenwänden 6 beziehungsweise am Unterteil 3. Es ist darauf hinzuweisen, dass der Adapter 12 und somit auch die Klemme 11 lediglich an den Seitenwänden 6 des Unterteils 3 befestigt sind, nicht jedoch am Boden 5.

Die Klemme 11 und der Adapter 12 sind in Fig. 7 dargestellt. Die Klemme 11 weist eine Rückseite 19 sowie eine gegenüberliegende Vorderseite 17 auf. Mit der Rückseite 19 liegt die Klemme 11 im montierten Zustand am Adapter 12 an. Es sind Verbindungsmittel an der Klemme 11 und am Adapter 12 vorgesehen, um beide Teile miteinander zu verbinden.

Hierbei handelt es sich im Ausführungsbeispiel um eine Rastverbindung. Die Klemme 11 wird einfach in den Adapter 12 eingeschoben. Beim Erreichen der Solllage schnappt ein Rasthaken 25 des Adapters 12 in eine entsprechende Ausnehmung der Klemme 11, so dass diese beiden Bauteile dann formschlüssig aneinandergehalten sind. Die Klemme 11 und der Adapter 12 können dann als Einheit verwendet werden, insbesondere an der Seitenwand 6 des Gehäuses 2 angeordnet werden.

Die Klemme 11 weist fünf Pole 13 auf. Die fünf Pole 13 sind elektrisch voneinander getrennt. Jeder Pol 13 weist zwei Anschlüsse 14, 15 auf. Die beiden Anschlüsse 14, 15 sind elektrisch leitend miteinander verbunden. In jeden der Anschlüsse 14, 15 kann eine Elektroleitung eingeführt werden.

Zwischen benachbarten Polen 13 weist die Klemme 11 jeweils eine Trennwand 18 auf. Die Trennwand 18 steht entgegen der Einschubrichtung 16 von der Vorderseite 17 der Klemme 11 vor. Die Trennwände 18 bilden eine Art Einführkanal für Elektroleitungen. Durch die Trennwände 18 kann sichergestellt werden, dass eine Elektroleitung nicht versehentlich abrutscht und dadurch in einen falschen Anschluss der Klemme 11 gerät.

Insbesondere der Darstellung gemäß Fig. 4 kann entnommen werden, dass der zur Verfügung stehende Montageraum im Inneren des Gehäuses 2 vergleichsweise groß ist, verglichen mit beispielsweise einer mittigen beziehungsweise zentralen Anordnung der Klemme 11 im Unterteil 3. Hinzu kommt, dass die Klemme 11 nicht auf den Boden 5 des Unterteils 3, sondern vielmehr an einer Seitenwand 6 befestigt ist. Zwischen der Unterseite der Klemme 11 und dem Boden 5 des Unterteils 3 verbleibt im endmontierten Zustand ein Spalt. Die Klemme 11 ist also vergleichsweise hoch angeordnet. Dies verbessert ebenfalls die Zugänglichkeit der Anschlüsse 14, 15 und damit insgesamt die Handhabung.

Im Unterteil 3 ist eine Vielzahl von Verbindungsmitteln 24 für den Adapter 12 vorgesehen. In jeder Ecke des Unterteils 3, das heißt jeweils im Bereich des Aufeinandertreffens zweier Seitenwände 6, ist ein entsprechendes Verbindungsmittel 24 vorgesehen. Der Adapter 12 mit der Klemme 11 kann daher wahlweise an jeder der vier Seitenwände 6 des Unterteils 3 angeordnet werden. Der Adapter 12 mit der Klemme 11 ist zudem zerstörungsfrei lösbar im Unterteil 3 angeordnet. Das heißt durch entsprechendes Lösen des Verbindungsmittels 23 kann der Adapter 12 nach erfolgter Montage wieder entnommen werden.

Die Anordnung der Klemme 11 an der Seitenwand 6 einerseits und die oval geformte Außenfläche des Deckels 4 und/oder des Unterteils 3 müssen nicht zwingend miteinander kombiniert vorliegen.

### Bezugszeichenliste

- 1: Abzweigkasten
- 2: Gehäuse
- 3: Unterteil
- 4: Deckel
- 5: Boden
- 6: Seitenwand
- 7: Bein
- 8: Oberseite
- 9: Befestigungsmittel
- 10: Kragen
- 11: Klemme
- 12: Adapter
- 13: Pol
- 14: Anschluss
- 15: Anschluss
- 16: Einschubrichtung
- 17: Vorderseite
- 18: Trennwand
- 19: Rückseite
- 21: Befestigungsmittel
- 23: Verbindungsmittel
- 24: Verbindungsmittel
- 25: Rasthaken
- H: Höhe
- E: Ecke

## Patentansprüche

1. Abzweigkasten (1) für die Installation von Elektrokabeln, mit einem Gehäuse (2), welches mehrere, vorzugsweise vier jeweils eine Ecke aufweisende Eckbereiche aufweist, wobei wenigstens einer der Eckbereiche in Richtung seiner Ecke abfallend ausgebildet ist, wobei das Gehäuse (2) ein Unterteil (3) und einen Deckel (4) aufweist, wobei das Unterteil (3) und der Deckel (4) zueinander korrespondierende Befestigungsmittel (9) aufweisen, wobei die Befestigungsmittel (9) in den Eckbereichen des Gehäuses (2) angeordnet sind, und wobei eine Oberfläche des Gehäuses (2), in der eine Öffnung für eines der Befestigungsmittel (9) ausgebildet ist, gekrümmt oder schräg zur Achse des Befestigungsmittels (9) verläuft, **dadurch gekennzeichnet, dass** das Unterteil (3) und der Deckel (4) in Richtung der Befestigungsmittel (9) abgesenkt und/oder gekrümmt ausgebildet sind und dass die Befestigungsmittel (9) einen Kopf aufweisen, dessen Oberseite entsprechend der Oberfläche des Gehäuses (2) gekrümmt oder schräg ausgebildet ist, wobei das Befestigungsmittel (9) im geschlossenen Zustand mit der Außenoberfläche des Gehäuses (2) fluchtet und im geöffneten Zustand zumindest teilweise von der Außenoberfläche des Gehäuses (2) vorsteht.

2. Abzweigkasten (1) nach Anspruch 1, **dadurch gekennzeichnet, dass** die Höhe eines Innenraums im Gehäuse (2) in wenigstens einem Eckbereich reduziert ist.

3. Abzweigkasten (1) nach einem der vorangehenden Ansprüche, **dadurch gekennzeichnet, dass** die Außenoberfläche des Gehäuses (2) in Richtung wenigstens eines Eckbereichs gekrümmt ausgebildet ist.

4. Abzweigkasten (1) nach einem der vorhergehenden Ansprüche, **dadurch gekennzeichnet, dass** zumindest eines der Befestigungsmittel (9) derart ausgebildet ist, dass es im geöffneten Zustand von der Außenoberfläche des Gehäuses (2) vorsteht und im geschlossenen Zustand im Gehäuse (2) versenkt ist.

5. Abzweigkasten (1) nach einem der vorhergehenden Ansprüche, **dadurch gekennzeichnet, dass** der Deckel (4) im geschlossenen Zustand formbündig in das Unterteil (3) übergeht.

6. Abzweigkasten (1) nach einem der vorhergehenden Ansprüche, **dadurch gekennzeichnet, dass** zumindest der Rand der Außenoberfläche des Unterteils (3) und/oder des Deckels (4) in Richtung des Befestigungsmittels (9) abgesenkt, insbesondere gekrümmt ausgebildet ist.

7. Abzweigkasten (1) nach einem der vorhergehenden Ansprüche, **dadurch gekennzeichnet, dass** die Außenoberfläche des Unterteils (3) und/oder des Deckels (4) in zwei linear unabhängigen Raumrichtungen gekrümmt ausgebildet ist.

8. Abzweigkasten (1) nach einem der vorangehenden Ansprüche, **dadurch gekennzeichnet, dass** das Unterteil (3) einen Boden (5) und Seitenwände (6) aufweist, wobei zumindest eine Seitenwand (6) konvex ausgebildet ist.

9. Abzweigkasten (1) nach einem der vorangehenden Ansprüche, **dadurch gekennzeichnet, dass** der Deckel (4) Beine (7) aufweist.

10. Abzweigkasten (1) nach Anspruch 9, **dadurch gekennzeichnet, dass** der Deckel (4) zwischen zwei Beinen (7) konkav ausgebildet ist.

11. Abzweigkasten (1) nach einem der Ansprüche 9 oder 10, **dadurch gekennzeichnet, dass** der Deckel (4) die Gestalt eines Tisches mit einer Tischoberflärhe aufweist, wobei die Kanten und die Ecken der Tischoberfläche derart gekrümmt ausgebildet sind, dass die Tischoberfläche gekrümmt in die Beine (7) übergeht.

12. Abzweigkasten (1) nach einem der Ansprüche 9 bis 11, **dadurch gekennzeichnet, dass** die Befestigungsmittel (9) an den Beinen (7) angeordnet sind.

13. Abzweigkasten (1) nach einem der vorangehenden Ansprüche, **dadurch gekennzeichnet, dass** das Gehäuse (2) flache Bereiche aufweist, welche stetig in den abfallenden Eckbereich übergehen.

14. Abzweigkasten (1) nach einem der vorangehenden Ansprüche, **dadurch gekennzeichnet, dass** das Gehäuse (2) sphärisch ausgebildet ist mit sechs schräg, insbesondere rechtwinklig zueinander ausgerichteten flachen Bereichen.

## Claims

1. A junction box (1) for installing electrical cables, comprising a housing (2) which includes several, preferably four corner areas which each comprise a corner, wherein at least one of the corner areas is sloping down into the direction of the corner thereof, wherein the housing (2) comprises a bottom part (3) and a cover (4), wherein the bottom part (3) and the cover (4) comprise fastening means (9) corresponding to each other, wherein the fastening means (9) are arranged in the corner areas of the housing (2) and wherein a surface of the housing (29) in which an opening for one of the fastening means (9) is formed, extends in a curved or inclined manner with respect to the axis of the fastening means (9), **characterized in that** the bottom part (3) and the cover (4) are configured as to be lowered and/or curved into the direction of the fastening means (9) and that the fastening means (9) comprise a head, the surface of which is curved or inclined in a corresponding manner to the surface of the housing (2), wherein in the closed state the fastening means (9) is aligned with the external surface of the housing (2) and in the opened state it projects at least partly from the external surface of the housing (2).

2. A junction box (1) according to claim 1, **characterized in that** the height of an inner space in the housing (2) is reduced in at least one corner area.

3. A junction box (1) according to one of the preceding claims, **characterized in that** the external surface of the housing (2) is configured as to be curved in the direction of at least one corner area.

4. A junction box (1) according to one of the preceding claims, **characterized in that** at least one of the fastening means (9) is configured such that it projects from the external surface of the housing (2) in the opened state and is sunk in the housing (2) in the closed state.

5. A junction box (1) according to one of the preceding claims, **characterized in that** the cover (4) merges in a flush manner into the bottom part (3) in the closed state.

6. A junction box (1) according to one of the preceding claims, **characterized in that** at least the border of the external surface of the bottom part (3) and/or the cover (4) is lowered, in particular curved into the direction of the fastening means (9).

7. A junction box (1) according to one of the preceding claims, **characterized in that** the external surface of the bottom part (3) and/or the cover (4) is curved into two linearly independent directions in space.

8. A junction box (1) according to one of the preceding claims, **characterized in that** the bottom part (3) comprises a bottom (5) and side walls (6), wherein at least one side wall (6) is configured as to be convex.

9. A junction box (1) according to one of the preceding claims, **characterized in that** the cover (4) comprises legs (7).

10. A junction box (1) according to claim 9, **characterized in that** the cover (4) is configured as to be concave between two legs (7).

11. A junction box (1) according to one of the claims 9 or 10, **characterized in that** the cover (4) comprises the shape of a table having a table surface, wherein the edges and the corners of the table surface are curved such that the table surface merges in a curved manner into the legs (7).

12. A junction box (1) according to one of the claims 9 through 11, **characterized in that** the fastening means (9) are arranged on the legs (7).

13. A junction box (1) according to one of the preceding claims, **characterized in that** the housing (2) comprises flat areas which continuously merge into the sloping down corner area.

14. A junction box (1) according to one of the preceding claims, **characterized in that** the housing (2) is configured as to be spherical with six flat areas that are oriented to each other in an inclined, in particular rectangular manner.

## Revendications

1. Boîte de jonction (1) pour installer des câbles électriques, comprenant un boîtier (2), qui comprend plusieurs, de préférence quatre zones de coin comprenant chacune un coin, au moins une des zones de coin étant configurée de manière inclinée dans la direction de son coin, le boîtier (2) comprenant une partie inférieure (3) et un couvercle (4), la partie inférieure (3) et le couvercle (4) comprenant des moyens de fixation (9), qui correspondent les uns aux autres, les moyens de fixation (9) étant disposés dans les zones de coin du boîtier (2) et une surface du boîtier (2), dans laquelle est formée une ouverture pour l'un des moyens de fixation (9), s'étendant de manière courbée ou inclinée par rapport à l'axe du moyen de fixation (9), **caractérisée en ce que** la partie inférieure (3) et le couvercle (4) sont configurés de manière abaissée et/ou courbée dans la direction des moyens de fixation (9) et que les moyens de fixation (9) comprennent une tête, dont la surface est courbée ou inclinée conformément à la surface du boîtier (2), le moyen de fixation (9) affleurant la surface extérieure du boîtier (2) à l'état fermé et faisant au moins partiellement saillie à partir de la surface extérieure du boîtier (2) à l'état ouvert.

2. Boîte de jonction (1) selon la revendication 1, **caractérisée en ce que** la hauteur d'un espace intérieur dans le boîtier (2) est réduite dans au moins une zone de coin.

3. Boîte de jonction (1) selon l'une des revendications précédentes, **caractérisée en ce que** la surface extérieure du boîtier (2) est configurée de manière courbée dans la direction d'au moins une zone de coin.

4. Boîte de jonction (1) selon l'une des revendications précédentes, **caractérisée en ce que** l'au moins un des moyens de fixation (9) est configuré de sorte qu'il fait saillie à partir de la surface extérieure du boîtier (2) à l'état ouvert et qu'il est encastré dans le boîtier (2) à l'état fermé.

5. Boîte de jonction (1) selon l'une des revendications précédentes, **caractérisée en ce que** le couvercle (4) passe de manière affleurant dans la partie inférieure (3) à l'état fermé.

6. Boîte de jonction (1) selon l'une des revendications précédentes, **caractérisée en ce que** l'au moins le bord de la surface extérieure de la partie inférieure (3) et/ou du couvercle (4) est configuré de manière abaissée, notamment courbée dans la direction du moyen de fixation (9).

7. Boîte de jonction (1) selon l'une des revendications précédentes, **caractérisée en ce que** la surface extérieure de la partie inférieure (3) et/ou du couvercle (4) est configurée de manière courbée dans deux directions d'espace indépendantes de façon linéaire.

8. Boîte de jonction (1) selon l'une des revendications précédentes, **caractérisée en ce que** la partie inférieure (3) comprend un fond (5) et des parois latérales (6), au moins une paroi latérale (6) étant configurée de manière convexe.

9. Boîte de jonction (1) selon l'une des revendications précédentes, **caractérisée en ce que** le couvercle (4) comprend des jambes (7).

10. Boîte de jonction (1) selon la revendication 9, **caractérisée en ce que** le couvercle (4) est configuré de manière concave entre deux jambes (7).

11. Boîte de jonction (1) selon l'une des revendications 9 ou 10, **caractérisée en ce que** le couvercle (4) a la forme d'une table comprenant une surface de table, les bords et les coins de la surface de table étant courbés de sorte que la surface de table passe de manière courbée dans les jambes (7).

12. Boîte de jonction (1) selon l'une des revendications 9 à 11, **caractérisée en ce que** les moyens de fixation (9) sont disposés sur les jambes (7).

13. Boîte de jonction (1) selon l'une des revendications précédentes, **caractérisée en ce que** le boîtier (2) comprend des zones plates, qui passent continument dans la zone de coin inclinée.

14. Boîte de jonction (1) selon l'une des revendications précédentes, **caractérisée en ce que** le boîtier (2) a une forme sphérique comprenant six zones plates orientées de manière inclinée, notamment de manière orthogonale les unes par rapport aux autres.
